# EUROPÄISCHE PATENTSCHRIFT

(11) **EP 3 638 616 B1**
(45) Veröffentlichungstag und Bekanntmachung des Hinweises auf die Patenterteilung: **20.07.2022**
(21) Anmeldenummer: 18707020.6
(22) Anmeldetag: 22.02.2018
(51) Int. Cl.: B67C 3/22, B25J 5/00, B25J 9/00, B25J 15/00

(54) **BEHÄLTERBEHANDLUNGSANLAGE MIT MOBILEM ROBOTER ZUM BAUTEILWECHSEL**
CONTAINER TREATMENT MACHINE WITH MOBILE ROBOT FOR COMPONENT EXCHANGE
MACHINE DE TRAITEMENT DES RECIPIENTS AVEC ROBOT MOBIL POUR CHANGER DES COMPOSANTS

(30) Priorität: 12.06.2017 DE 102017209838
(43) Veröffentlichungstag der Anmeldung: 22.04.2020
(60) Teilanmeldung: 22179214.6
(73) Patentinhaber: Krones AG, 93073 Neutraubling (DE)
(72) Erfinder: RAITH, Stefan, 93073 Neutraubling (DE); HAHN, Wolfgang, 93073 Neutraubling (DE); HACK, Andreas, 93073 Neutraubling (DE); GELTINGER, Florian, 93073 Neutraubling (DE); ZOELFL, Markus, 93073 Neutraubling (DE)
(74) Vertreter: Grünecker Patent- und Rechtsanwälte PartG mbB
(86) Internationale Anmeldenummer: PCT/EP2018/054334
(87) Internationale Veröffentlichungsnummer: WO 2018/228727

(56) Entgegenhaltungen:
- EP-A1- 1 132 334
- EP-A2- 2 199 220
- EP-A2- 2 292 402
- WO-A1-02/45915
- US-A1- 2008 302 200

## Beschreibung

Die Erfindung betrifft eine Behälterbehandlungsanlage zum Behandeln von Behältern wie Flaschen gemäß Anspruch 1 und ein Verfahren zum Wechseln eines Bauteils einer Behälterbehandlungsmaschine einer Behälterbehandlungsanlage in der getränkeverarbeitenden Industrie gemäß Anspruch 9.

### Stand der Technik

Behälterbehandlungsanlagen umfassend eine oder mehrere Behälterbehandlungsmaschinen sind aus dem Stand der Technik bekannt.

Es ist ebenfalls bekannt, dass diese Maschinen bei einem Formatwechsel, beispielsweise bei der Umrüstung von einer ersten Flaschengröße auf eine zweite Flaschengröße, umgebaut werden müssen. Dazu werden üblicherweise Bauteile der Maschinen ausgetauscht. Beispielsweise können die Blasformen einer Blasformmaschine ausgetauscht werden.

Solche Formatwechsel erfolgen meist händisch, d. h. ein Bediener der Maschine nimmt sie vor. Dies ist mit einem erheblichen Zeitaufwand und physischen Belastungen für den Bediener verbunden.

Eine Behälterbehandlungsanlage mit einem automatisierten Wechsel von Bauteilen gemäß dem Oberbegriff des Anspruchs 1 ist aus der EP 1 132 334 A1 bekannt. Ein Automat zum Wechsel von Blasformen ist in der EP 2 292 402 A2 beschrieben.

Beispiele für mobile kollaborierende Roboter sind in US 2008/302200 A1 und in WO 02/45915 A1 offenbart.

### Aufgabe

Ausgehend vom bekannten Stand der Technik besteht die zu lösende technische Aufgabe somit darin, eine Behälterbehandlungsanlage anzugeben, bei der ein Wechsel eines Bauteils möglichst zeitsparend und für den Bediener einfach durchgeführt werden kann.

### Lösung

Diese Aufgabe wird durch die Behälterbehandlungsanlage gemäß Anspruch 1 und das Verfahren zum Wechseln eines Bauteils einer Behälterbehandlungsmaschine einer Behälterbehandlungsanlage gemäß Anspruch 9, sowie das System von Behälterbehandlungsanlagen nach Anspruch 12 gelöst. Vorteilhafte Weiterbildungen der Erfindung sind in den Unteransprüchen erfasst.

Die erfindungsgemäße Behälterbehandlungsanlage zum Behandeln von Behältern, wie Flaschen, umfasst wenigstens eine Behälterbehandlungsmaschine und einen mobilen, kollaborierenden Roboter, der zur Roboter-Roboter-Interaktion und/oder zur Robert-Mensch-Interaktion ausgebildet ist, wobei der kollaborierende Roboter ausgebildet ist, bei einem Wechsel eines Bauteils der Behälterbehandlungsmaschine mitzuwirken.

Unter einem kollaborierenden Roboter sollen dabei sämtliche, von einem Computer oder einer Prozessoreinheit gesteuerten Vorrichtungen verstanden werden, die beispielsweise mit einem Werkzeug oder ähnlichem Mittel zur Interaktion mit der Umgebung ausgestattet sind und mit Menschen oder anderen Robotern derart interagieren können, dass sie mit dem Menschen oder dem Roboter zur Erfüllung einer bestimmten Aufgabe, beispielsweise dem Wechseln eines Bauteils, zusammenarbeiten und Teilschritte eines solchen Prozesses entweder selbst ausführen oder an diesen unterstützend beteiligt sind. Beispielsweise kann der kollaborierende Roboter ein für einen Bediener zu schweres Bauteil heben, während der Bediener das Bauteil an die richtige Position manövriert. Insbesondere sollen unter dem Begriff der kollaborierenden Roboter die bereits bekannten COBOTs verstanden werden.

Die Mitwirkung des kollaborierenden Roboters beim Wechseln eines Bauteils der Behälterbehandlungsmaschine ist so zu verstehen, dass der kollaborierende Roboter entweder wenigstens einen Teilschritt des Wechsels des Bauteils durchführt oder an einem solchen Teilschritt zumindest beteiligt ist und ihn in Zusammenwirkung mit einem Menschen oder einem anderen Roboter ausführt. Die Mitwirkung des Roboters ist dabei nicht auf die zeitgleiche Zusammenarbeit mit einem Bediener/Menschen derart beschränkt, dass sowohl der Bediener als auch der Roboter zur selben Zeit Aufgaben an der Maschine erledigen - gemeinsam oder unabhängig voneinander. Die Mitwirkung kann auch vorbereitende oder nachfolgende Schritte umfassen, die nicht nur während des Stillstands der Maschine, sondern auch während der Produktion möglich sind. Dazu gehören beispielsweise aber nicht ausschließlich das Bereitstellen von (neuen oder zusätzlichen) Materialien, Wechselteilen, Werkzeugen für das Rüsten, sowie das Entsorgen von (alten oder benutzten) Materialien, Wechselteilen, Werkzeugen etc. nach dem Rüsten. Es versteht sich, dass diese vorbereitenden Schritte und/oder nachfolgenden Schritte an der Maschine auch durchgeführt werden können, während ein Bediener anwesend ist und bereits andere Aufgaben ausführt. Ferner sind diese Schritte auch in völliger Abwesenheit eines Bedieners durchführbar und erfordern in keinem Fall zwingend die Zusammenarbeit mit einem möglicherweise anwesenden Bediener.

Der Begriff eines "mobilen", kollaborierenden Roboters ist hier so zu verstehen, dass der Roboter als Ganzes nicht an einen bestimmten Ort gebunden ist, sondern beispielsweise in einer Werkshalle von einem Ort zu einem anderen Ort bewegt werden kann. Diese Bewegung kann entweder autonom erfolgen, das heißt also der Roboter kann sich selbständig, im Wesentlichen ohne weitere Kontrolle oder Steuerung durch einen Bediener, von einem Ort zu einem anderen Bewegen. Oder die Bewegung des Roboters kann durch einen Bediener gesteuert werden.

Die Verwendung solcher mobiler kollaborierender Roboter erlaubt einen zeitlich effizienten Wechsel von Bauteilen, wobei der Umfang menschlicher Arbeitsleistung reduziert bzw. zumindest die vom Bediener aufzubringende Arbeitskraft und durchzuführenden Handlungen beim Wechseln eines Bauteils reduziert werden können. Gleichzeitig kann vorteilhaft die Fehleranfälligkeit beim Wechseln von Bauteilen reduziert werden, da zumindest einige Teilschritte des Wechsels des Bauteils durch einen Roboter durchgeführt werden.

Erfindungsgemäß ist vorgesehen, dass der kollaborierende Roboter über ein Sicherungssystem verfügt, das ausgebildet ist, laufend ein Kollisionsrisiko mit einem Menschen in einer Umgebung des Roboters zu bestimmen, um die Bewegungen des Roboters so zu steuern, dass das Kollisionsrisiko minimiert wird. So kann das Risiko von Beschädigungen anderer Roboter und insbesondere das Verletzungsrisiko für mit dem kollaborierenden Roboter zusammenarbeitende Bediener minimiert werden.

In einer Weiterbildung dieser Ausführungsform umfasst der Roboter keine trennende Schutzeinrichtung. Unter einer trennenden Schutzeinrichtung sind beispielsweise Schutzwände zu verstehen, die den Bewegungsbereich des Roboters von der Umgebung abgrenzen, so dass ein Bediener nicht versehentlich in diesen Bewegungsbereich gelangen kann. Können diese Schutzeinrichtungen entfallen, kann eine direkte Interaktion des kollaborierenden Roboters mit einem Bediener oder einem anderen Roboter erfolgen, so dass die Zusammenarbeit beim Wechseln von Bauteilen noch effizienter gestaltet werden kann.

In einer weiteren Ausführungsform umfasst die Behälterbehandlungsanlage eine zweite Behälterbehandlungsmaschine, wobei der kollaborierende Roboter zwischen der Behälterbehandlungsmaschine und der zweiten Behälterbehandlungsmaschine verfahrbar ist. So ist es nicht mehr notwendig, an jeder Behälterbehandlungsanlage alle für den Wechsel eines Bauteils notwendigen Roboter separat vorzusehen, sondern Roboter, die beispielsweise an jeder Behälterbehandlungsmaschine zum Wechseln eines Bauteils benötigt werden, können mit dieser Ausführungsform allen Behälterbehandlungsmaschinen zur Verfügung gestellt und dennoch die Anschaffungskosten der Anlage reduziert werden.

Es kann ferner vorgesehen sein, dass der Roboter einen Roboterarm mit einem Werkzeug zum Interagieren mit einer Behälterbehandlungsmaschine umfasst. Dieses Werkzeug kann beispielsweise in Form einer Klammer, eines Greifers oder eines Schraubenziehers oder ähnlichem ausgebildet sein und vom Roboter genutzt werden, um beispielsweise ein Bauteil der Behälterbehandlungsmaschine zu halten oder es von dieser zu lösen oder an dieser anzubringen.

In einer Weiterbildung dieser Ausführungsform ist vorgesehen, dass der kollaborierende Roboter ein Werkzeugwechselsystem umfasst, mit dem das Werkzeug des Roboters gegen ein anderes, in dem Werkzeugwechselsystem mitgeführtes Werkzeug ausgetauscht werden kann. Beispielsweise kann das Werkzeugwechselsystem als ein Behälter für unterschiedliche Werkzeuge ausgebildet sein und der Roboter kann ausgebildet sein, eines seiner Werkzeuge in diesem Kasten abzulegen und ein anderes Werkzeug zu entnehmen und an Stelle des ersten Werkzeugs zu verwenden. Zum Auswechseln der Werkzeuge des Roboters kann auch vorgesehen sein, dass der Roboter einen zusätzlichen Roboterarm umfasst oder ihm ein solcher zugeordnet ist, der dafür ausgebildet ist, ein Werkzeug vom Roboter zu entfernen und gegen eines aus dem Werkzeugwechselsystem auszutauschen.

Der kollaborierende Roboter wird so noch flexibler einsetzbar und kann vorteilhaft an unterschiedlichen Behälterbehandlungsmaschinen der Behälterbehandlungsanlage auch für unterschiedliche Zwecke eingesetzt werden.

Weiterhin kann der kollaborierende Roboter auf einem verfahrbaren Podest angeordnet sein. So können Komponenten des Roboters möglichst stabil abgestützt werden (auf dem Podest) und gleichzeitig ein Verfahren des kollaborierenden Roboters als Ganzes mittels des Podests realisiert werden.

In einer Weiterbildung dieser Ausführungsform bildet das verfahrbare Podest mit einer als Stator ausgebildeten und durch die Behälterbehandlungsanlage verlaufenden Führung einen Linearantrieb. Linearantriebe sind energetisch sparsam und gleichzeitig sehr genau steuerbar, so dass die Position des kollaborierenden Roboters flexibel und gleichzeitig mit hoher Genauigkeit eingestellt werden kann.

Es sind auch andere Möglichkeiten des Antriebs denkbar, die je nach Anforderungen vorteilhaft implementiert werden können. So kommen bevorzugt Koppelnavigation (auch Odometrie), Spurführung mit kontinuierlichen Leitlinien, LIDAR-Systeme, Rasternavigation, Lasernavigation, 2D- und 3D-Laserscanner in Verbindung mit Umgebungsmerkmalen (2D oder 3D), 2D-Kameras oder 3D-Kameras in Verbindung mit Bilderkennungssoftware, sowie GPS-Systeme, insbesondere Indoor-GPS-Systeme infrage. In diesen Fällen kann der Roboter vorteilhaft mit einem eigenen Antrieb ausgestattet sein, insbesondere einem Elektroantrieb.

In einer Ausführungsform ist vorgesehen, dass der mobile, kollaborierende Roboter als humanoider Roboter ausgebildet ist und zwei Arme und/oder zwei Beine umfasst, die ausgebildet sind, bei vom Roboter ausgeführten Tätigkeiten zusammenzuwirken. Die Interaktion mit einem Bediener kann so noch effektiver erfolgen und ebenfalls können zusätzliche Schutzmaßnahmen wie Schutzwände entfallen.

Das erfindungsgemäße Verfahren zum Wechseln eines Bauteils einer Behälterbehandlungsmaschine einer Behälterbehandlungsanlage in der getränkeverarbeitenden Industrie umfasst ein Mitwirken eines zur Roboter-Roboter-Interaktion und/oder zur Roboter-Mensch-Interaktion ausgebildeten mobilen, kollaborierenden Roboters bei dem Wechsel des Bauteils. Die vom Bediener zu unternehmenden Anstrengungen können so reduziert und gleichzeitig die Fehleranfälligkeit beim Wechseln von Bauteilen vermindert werden.

Erfindungsgemäß bestimmt der kollaborierende Roboter mittels eines Sicherungssystems laufend ein Kollisionsrisiko mit einem Menschen in der Umgebung des Roboters und die Bewegung des Roboters wird so gesteuert, dass das Kollisionsrisiko minimiert wird. Das Verletzungsrisiko für den mit dem kollaborierenden Roboter interagierenden Bediener kann so reduziert werden.

In einer Ausführungsform führt der kollaborierende Roboter wenigstens eine der folgenden Tätigkeiten aus oder wirkt bei ihnen mit: Aufnehmen von Bauteilen an einer bestimmten Position, Bewegen von Bauteilen an eine bestimmte Position, Befestigungen von Bauteilen Herstellen und/oder Lösen, An- und/oder Abkoppeln von Medienleitungen und/oder Kabeln und/oder Versorgungsleitungen, und Durchführen von Justagearbeiten. Diese Tätigkeiten umfassen entweder das Bewegen schwerer Objekte und/oder Erfordern erhebliche Genauigkeit. Für beide Aufgaben sind Roboter besonders geeignet.

Es kann ferner vorgesehen sein, dass der kollaborierende Roboter vor und/oder während des Wechsels eines Bauteils der Behälterbehandlungsmaschine ein Werkzeug am kollaborierenden Roboter gegen ein anderes, in einem Werkzeugwechselsystem mitgeführtes Werkzeug austauscht.

Der kollaborierende Roboter ist damit flexibel auch für den Wechsel unterschiedlicher Bauteile von Behälterbehandlungsmaschinen einsetzbar.

Erfindungsgemäß wird ferner ein System aus wenigstens zwei Behälterbehandlungsanlagen bereitgestellt, die jeweils wenigstens zwei Behälterbehandlungsmaschinen zum Behandeln von

Behältern umfassen, wobei das System wenigstens einen mobilen, kollaborierenden Roboter umfasst, der zur Roboter-Roboter-Interaktion und/oder zur Roboter-Mensch-Interaktion ausgebildet ist, wobei der kollaborierende Roboter ausgebildet ist, bei einem Wechsel eines Bauteils einer Behälterbehandlungsmaschine einer der Behälterbehandlungsanlagen mitzuwirken und sich selbständig zwischen der Behälterbehandlungsmaschine der Behälterbehandlungsanlage und einer anderen Behälterbehandlungsmaschine der anderen Behälterbehandlungsanlage zu bewegen.

In einer Ausführungsform ist vorgesehen, dass die Behälterbehandlungsanlagen als Getränkeabfüllanlagen ausgebildet sind und jeweils wenigstens einen Füller zum Befüllen von Behältern mit einem Produkt und einen stromab (d.h. stromab der Transport- oder Bewegungsrichtung der Behälter in der Anlage) des Füllers angeordneten Verschließer zum Verschließen der Behälter umfassen.

### Kurze Beschreibung der Figuren

- Figur 1: zeigt eine schematische Darstellung einer Ausführungsform einer Behälterbehandlungsanlage,
- Figur 2a: zeigt eine detailliertere schematische Ansicht eines kollaborierenden Roboters gemäß einer Ausführungsform,
- Figur 2b: zeigt eine detailliertere schematische Ansicht eines kollaborierenden Roboters in einer Ausführungsform als humanoider Roboter.

### Ausführliche Beschreibung

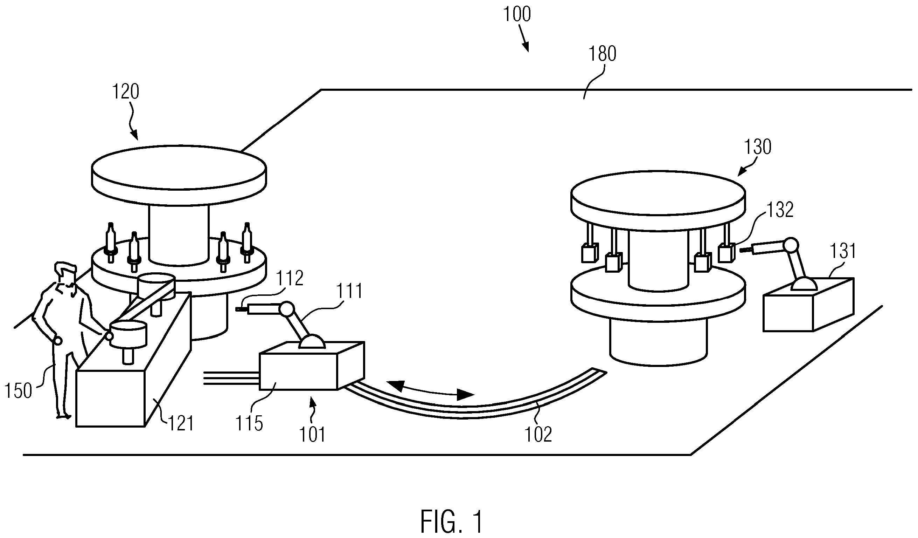

Figur 1 zeigt eine schematische Ansicht einer Behälterbehandlungsanlage 100 gemäß einer Ausführungsform. In der hier dargestellten Ausführung ist die Behälterbehandlungsanlage beispielsweise in einer Werkshalle 180 angeordnet und umfasst zwei Behälterbehandlungsmaschinen 120 und 130. Die Behälterbehandlungsmaschine 120 ist in dieser Ausführungsform als Etikettiermaschine mit einem ihr zugeordneten Etikettieraggregat 121 ausgebildet und die Behälterbehandlungsmaschine 130 ist als Blasformmaschine mit ihr zugeordneten Blasformen 132 ausgebildet.

Diese beispielhaften Ausführungen sind nicht zwingend und die Behälterbehandlungsanlage 100 kann auch völlig andere Behälterbehandlungsmaschinen und auch andere Zahlen von Behälterbehandlungsmaschinen (beispielsweise nur eine oder mehr als zwei) umfassen.

Im Übrigen sind auch Ausführungsformen umfasst, in denen nicht nur eine Behälterbehandlungsanlage, sondern mehrere Behälterbehandlungsanlagen vorgesehen sind. Diese können zumindest teilweise gleiche Behälterbehandlungsmaschinen umfassen. So kann beispielsweise eine erste Behälterbehandlungsanlage eine Blasformmaschine, einen Füller, einen Verschließer und eine Etikettiermaschine umfassen, wohingegen die zweite Behälterbehandlungsanlage eine Blasformmaschine, einen Füller, einen Verschließer und eine Druckmaschine zum Bedrucken der Behälter umfasst.

Ferner ist in der in Figur 1 dargestellten Ausführung der Behälterbehandlungsmaschine 130 ein stationärer Roboter 131 zugeordnet, der ausgebildet sein kann, Bauteile der Behälterbehandlungsmaschine 130 zu manipulieren. Beispielsweise kann dieser Roboter Blasformen der als Blasformmaschine ausgeführten Behälterbehandlungsmaschine 130 auswechseln.

Hingegen kann in der in Figur 1 dargestellten Situation ein Bediener 150 Arbeiten an der Behälterbehandlungsmaschine 120 übernehmen. Beispielsweise kann er eine leere Etikettenrolle an dem Etikettieraggregat 121 austauschen.

Roboter 131 und Bediener 150 sind hier nur beispielhaft zur Veranschaulichung verschiedener, im Folgenden beschriebener Sachverhalte dargestellt. Beispielsweise kann anstelle des Roboters 131 auch ein weiterer Bediener vorgesehen sein oder mehrere Bediener und/oder Roboter können gemeinsam an einer Behälterbehandlungsmaschine arbeiten.

Erfindungsgemäß umfasst die Behälterbehandlungsanlage 100 weiterhin einen mobilen, kollaborierenden oder kollaborativen Roboter 101. Dieser Roboter kann in der hier dargestellten Ausführungsform beispielsweise auf einem verfahrbaren Podest 115 angeordnet sein, das vorzugsweise durch die gesamte Werkshalle 180 verfahrbar ist. Im Folgenden kann das Podest als Teil des Roboters 101 verstanden werden.

Da der kollaborierende Roboter 101 üblicherweise in Verbindung mit einer oder mehreren Behälterbehandlungsmaschinen 120 und 130 verwendet werden soll, kann der Roboter 101 auch entlang einer Führung 102 beweglich angeordnet sein. Insbesondere können das Podest und die Führung 102 zusammen einen Linearmotor bilden, derart, dass die Führung 102 den Stator dieses Linearmotors bildet. Auch andere Ausführungen für das Bewegen des Roboters kommen in Betracht. Insbesondere kann der Roboter über einen eigenen Antrieb verfügen (bevorzugt ein Elektroantrieb mit wenigstens einem Elektromotor) und auch mit einem eigenen Navigationssystem ausgestattet sein, sodass er sich im Wesentlichen selbständig bewegen kann. So kommen bevorzugt Koppelnavigation (auch Odometrie), Spurführung mit kontinuierlichen Leitlinien, LIDAR-Systeme, Rasternavigation, Lasernavigation, 2D- und 3D-Laserscanner in Verbindung mit Umgebungsmerkmalen (2D oder 3D), 2D-Kameras oder 3D-Kameras in Verbindung mit Bilderkennungssoftware, sowie GPS-Systeme, insbesondere Indoor-GPS-Systeme infrage.

Die Energieversorgung des Roboters kann durch einen oder mehrere Energiespeicher, bevorzugt Akkumulatoren erfolgen. Diese können entweder an einer zentralen Ladestation geladen werden, wenn der Roboter nicht eingesetzt wird, oder mittels induktiver Verfahren, beispielsweise an jeder Behälterbehandlungsmaschine, während des Betriebs mit Energie versorgt werden. Ferner können leere Akkumulatoren auch vom Roboter selbständig gegen einen voll aufgeladenen Akkumulator ausgetauscht werden, sodass Stillstandszeiten des Roboters kurz gehalten werden können und er möglichst immer einsatzbereit ist.

Ferner sei erwähnt, dass der Roboter nicht auf eine Bewegung zwischen Behälterbehandlungsmaschinen einer einzigen Behälterbehandlungsanlage beschränkt ist. Wie bereits oben ausgeführt, können auch mehrere Behälterbehandlungsanlagen vorgesehen sein. In diesem Fall kann sich der Roboter auch zwischen Behälterbehandlungsmaschinen der verschiedenen Behälterbehandlungsanlagen bewegen. Die dafür nötigen Einrichtungen für die Navigation und ggf. auch der eigenständige Antrieb sind hier dieselben, wie sie es bei der Bewegung zwischen Behälterbehandlungsmaschinen einer einzigen Behälterbehandlungsanlage sind.

Besonders bevorzugt kann es sein, wenn ein kollaborierender Roboter für jeden Typ von Behälterbehandlungsmaschine vorgesehen ist, der an die bei diesem Typ anfallenden Aufgaben besonders angepasst ist. So kann ein erster Typ Roboter für Arbeiten an Blasformmaschinen mit besonderen Werkzeugen ausgestattet sein, wohingegen ein anderer Typ Roboter für Arbeiten an Etikettiermaschinen mit anderen Werkzeugen ausgestattet ist.

Der Roboter kann über einen Roboterarm 111 verfügen, an dessen einem Ende wenigstens ein Werkzeug 112 angebracht sein kann. Bei dem Werkzeug kann es sich beispielsweise um einen Greifer oder einen ähnlichen Mechanismus zum Festhalten von Gegenständen, insbesondere Bauteilen der Behälterbehandlungsmaschine handeln.

Erfindungsgemäß ist vorgesehen, dass der kollaborierende Roboter 101 wenigstens beim Wechseln eines Bauteils an der Behälterbehandlungsmaschine 120 (unabhängig von deren spezifischen Ausführung als Etikettiermaschine) dem Bediener assistieren kann. So kann der kollaborierende Roboter 101 beispielsweise Verbindungen am Etikettieraggregat lösen, so dass der Bediener die leere Etikettenrolle aufnehmen kann. Alternativ kann auch der Bediener die Verbindungen (beispielsweise Verschraubungen) lösen und der kollaborierende Roboter hält währenddessen die Etikettenrolle, um ein Herabfallen dieser auf den Bediener zu verhindern und so dessen Verletzungsrisiko zu minimieren.

Zusätzlich oder alternativ kann auch vorgesehen sein, dass der kollaborierende Roboter 101 beispielsweise mit dem Roboter 131 beim Wechseln eines Bauteils der Behälterbehandlungsmaschine 130 (beispielsweise einer Blasform) zusammenwirken kann.

Grundsätzlich ist vorgesehen, dass der kollaborierende Roboter 101 nicht über trennende Schutzeinrichtungen wie Trennwände verfügt, oder ihm solche in einer Arbeitsposition, in der er beim Wechseln eines Bauteils an einer Behälterbehandlungsmaschine mitwirkt, zugeordnet sind. Der Arbeitsraum des kollaborierenden Roboters (beispielsweise des Roboterarms 111) ist daher zu jeder Zeit für einen Bediener 150, aber auch für andere Roboter 131, zugänglich. So kann eine tatsächliche Interaktion vom Bediener und anderen Robotern mit dem kollaborierenden Roboter ermöglicht werden und ein effektiver Umbau von Behälterbehandlungsmaschinen gewährleistet werden.

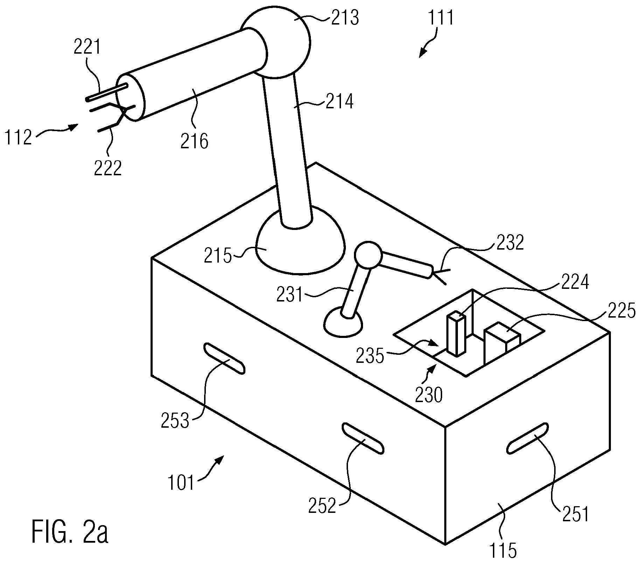

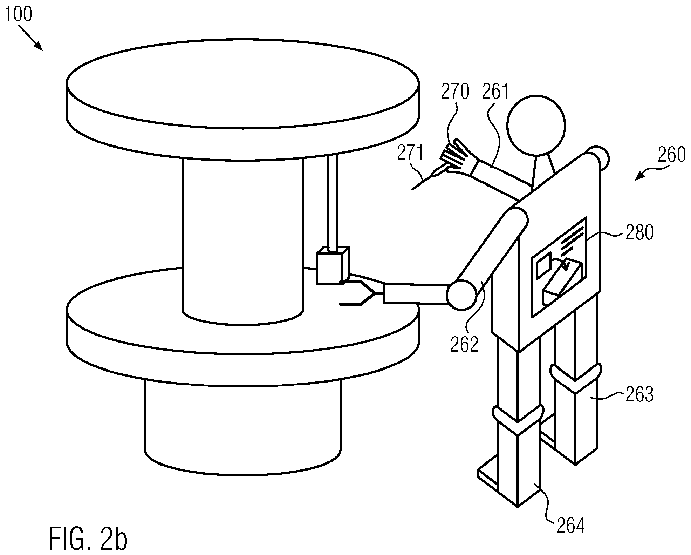

Um jedoch das Verletzungsrisiko insbesondere von Menschen, die mit einem solchen kollaborierenden Roboter zusammenarbeiten, zu verringern, ist ein Sicherungssystem vorgesehen , das das Kollisionsrisiko mit einem Bediener durch Steuerung der Bewegung des kollaborierenden Roboters 101 minimiert, wie dies in Figur 2 weiter ausgeführt wird.

Figur 2a zeigt eine detailliertere schematische Darstellung des kollaborierenden Roboters 101. Wie bereits mit Bezug auf Figur 1 beschrieben, kann der Roboter ein Podest 115 umfassen, mit dessen Hilfe der Roboter auf der Führung 102 aus Figur 1 platziert werden kann. Alternativ kann das Podest auch über Räder und eine Lenkung sowie einen eigenen Antrieb verfügen, um selbständig oder von einem Bediener zumindest teilweise gesteuert durch eine Werkshalle zu navigieren. Dazu kann der Roboter auch über ein integriertes Navigationssystem verfügen, das der Steuerung des Roboters eine zumindest relative Ortsbestimmung des Roboters gestattet.

In dem Podest kann ferner ein Teil oder die gesamte Steuerelektronik sowie die Energieversorgung des Roboters untergebracht sein.

Zusätzlich können an oder in dem Podest mehrere Sensoren 251 bis 253 vorgesehen sein, die einen Teil des Sicherungssystems bilden können, mit dem der Roboter 101 das Kollisionsrisiko mit einem in der Nähe des Roboters 101 befindlichen Bedieners bestimmt und seine Bewegungen so steuert, dass das Kollisionsrisiko mit dem Bediener (und damit das Verletzungsrisiko) möglichst minimiert wird. Dies kann autonom vom Roboter 101 bzw. der in dem Roboter vorgesehenen Steuerelektronik bewirkt werden oder auch in Interaktion mit anderen Steuereinheiten der Behälterbehandlungsanlage geschehen. Die Sensoren können auch als Teil des oben erwähnten Navigationssystems fungieren, um dem Roboter eine Ortsbestimmung und Bewegung beispielsweise durch die Werkshalle 180 zu ermöglichen.

Ferner kann der Roboter 101 einen Roboterarm 111 umfassen, der beispielsweise auf dem Podest 115 angeordnet ist. Der Roboterarm kann durch mehrere Gelenke 213 und 215 und mehrere Armsegmente 214 und 216 gebildet werden. Die hier dargestellten zwei Gelenke und zwei Armsegmente sind dabei nicht zwingend. So kann der Roboterarm auch aus lediglich einem Gelenk und einem Armsegment oder zwei Gelenken und einem Armsegment sowie mehreren Gelenken und mehreren Armsegmenten bestehen.

In jedem Fall umfasst der Roboter ein oder mehrere Werkzeuge 112. Zu diesen können, wie hier beispielhaft dargestellt, ein Schraubenzieher 121 sowie ein Greifer 222 zählen. Grundsätzlich kann der Roboterarm 111 über einen vorderen Bereich verfügen, in dem Befestigungsvorrichtungen für eine Vielzahl unterschiedlicher Werkzeuge angeordnet sind. Dabei kann es sich beispielsweise um Öffnungen mit Gewinden oder um Klickverbindungen handeln. Ferner können in diesem Bereich auch Anschlüsse für eine Versorgung von angebrachten Werkzeugen mit Strom oder Steuerungselektronik vorgesehen sein.

Besonders vorteilhaft ist es, wenn die Werkzeuge des Roboters 101 wechselbar, insbesondere schnell wechselbar sind. Besonders bevorzugt ist es hier, wenn der Roboter über ein Werkzeugwechselsystem 230 verfügt. Dieses Werkzeugwechselsystem kann durch eine Werkzeugaufbewahrung 235 und einem dieser Werkzeugaufbewahrung zugeordneten Roboterarm oder allgemein einem Roboter 231, der insbesondere über ein Greifelement 232 verfügt, gebildet werden. In der Werkzeugaufbewahrung 235 können mehrere Werkzeuge 225 und 224 angeordnet sein, die durch den Roboter 231 entnommen und an dem Roboterarm 111 angebracht werden können. Der Roboter 231 kann hierzu so ausgebildet sein, dass er in Wechselwirkung mit dem Roboterarm (oder einer entsprechend anderen Ausführung des Elements 111) ein an dem Roboterarm 111 montiertes Werkzeug 221 oder 222 entfernen, in der Werkzeugvorlage 235 ablegen kann und ein Werkzeug aus der Werkzeugvorlage 235 entnehmen und an den Roboterarm 111 montieren kann. Besonders bevorzugt ist es, wenn der Roboter 231 auch ausgebildet ist, eventuell herzustellende Verbindungen zwischen einem an dem Roboterarm 111 angebrachten Werkzeug und dem Roboterarm selbst (beispielsweise Steuerelektronik oder Befestigungen) herzustellen.

Grundsätzlich kann der so ausgestattete kollaborierende Roboter 101 eine Fülle von Tätigkeiten im Zusammenhang mit einem Wechsel von Bauteilen oder dem allgemeinen Umrüsten von Behälterbehandlungsmaschinen vornehmen. Dazu zählen insbesondere das Aufnehmen und Halten sowie Transportieren von Bauteilen, wie beispielsweise Blasformen, das Wechseln von Garnituren oder Bauteilen, nicht nur an den einzelnen Behälterbehandlungsmaschinen, sondern gegebenenfalls auch an Transportvorrichtungen und Verpackungsmaschinen. Ebenso können von dem Roboter Leitungen oder Verbindungen gelöst oder geschlossen werden und Verstell- oder Einstellarbeiten, insbesondere Justagearbeiten, vorgenommen werden.

Wie bereits erwähnt, verfügt der Roboter über ein Sicherungssystem, das genutzt werden kann, um das Kollisionsrisiko mit einem Bediener oder mit einem anderen Roboter zu minimieren. Das Sicherungssystem (in Figur 2a durch die Sensoren 251 bis 253 dargestellt) kann beispielsweise Radarsysteme oder LIDAR-Systeme umfassen. Zusätzlich oder alternativ können auch ein oder mehrere Kameras, insbesondere 3D-Kameras, genutzt werden. Auch Kontaktsensoren kommen hier in Frage. Zusätzlich oder alternativ können einige der beschriebenen Sensorsysteme auch genutzt werden, um einem frei beweglichen Roboter (der beispielsweise über Rollen beweglich auf dem Boden der Werkshalle 180 ist) die Navigation innerhalb der Werkshalle 180 zu ermöglichen.

Figur 2b zeigt eine weitere bevorzugte Ausführungsform eines erfindungsgemäßen mobilen Roboters. In dieser Ausführungsform ist der Roboter 260 als "humanoider" Roboter, bevorzugt mit zwei Armen 261, 262 und zwei Beinen 263, 264 oder zumindest mit zwei Armen (beispielsweise zwei Roboterarme, wie sie in Fig. 2a mit Bezugszeichen 111 beschrieben wurden) versehen. Die Arme und Beine können bevorzugt alle zusammen eingesetzt werden, um eine bestimmte Aufgabe auszuführen. So können die Arme vorteilhaft genutzt werden, um ein größeres und ggf. für einen Menschen zu schweres Bauteil zu halten und mittels der Beine an einen bestimmten Ort zu bewegen oder das Bauteil zu positionieren.

Die Arme 261 und 262 können analog zu dem Roboterarm 111 ausgebildet sein und auch diesbezüglich in Fig. 1 und 2a beschriebene Werkzeuge aufweisen, die ggf. austauschbar sind.

Alternativ oder zusätzlich kann einer der Arme oder beide Arme auch mit einer Roboterhand 270 ausgebildet sein, wie dies in Fig. 2b exemplarisch für den Arm 261 dargestellt ist. Bevorzugt ist der Roboter mit einer Steuereinheit (Computer oder ähnliches) ausgestattet, die eine Kontrolle der Roboterhand 270 annähernd entsprechend der Bewegung einer menschlichen Hand erlaubt. Die Roboterhand 270 kann mit mehreren ansteuerbaren Aktuatoren (Elektromotoren, insbesondere Stellantriebe) ausgestattet sein, um einzelne Glieder der Roboterhand 270 bevorzugt möglichst unabhängig voneinander zu bewegen.

Insbesondere kann vorgesehen sein, dass die Roboterhand zum Führen und Bedienen von Werkzeugen ausgebildet ist, die auch von einem Menschen verwendet werden können. Beispielsweise kann die Roboterhand 270 einen Schraubenzieher 271 greifen und diesen benutzen, um eine Schraube festzuziehen oder zu lösen. So können die beim Rüsten von Maschinen- oder Formteilen verwendeten Werkzeuge sowohl von einem menschlichen Bediener als auch dem Roboter genutzt werden, was die Zusammenarbeit von Mensch und Roboter erheblich vereinfachen kann.

Um die Interaktion noch mehr zu vereinfachen, können bei allen bisher beschriebenen Robotern auch Displays 280 und/oder Sprachausgaben zum Einsatz kommen, mit deren Hilfe ein in der Nähe des Roboters befindlicher Bediener beispielsweise über die vom Roboter ausgeführten Tätigkeiten informiert werden kann.

Weiterhin kann der Bediener über diese Einrichtungen mit dem Roboter interagieren, beispielsweise durch Bedienen des als Touchscreen ausgebildeten Displays 280 (alternativ kann dem Displays auch eine Tastatur oder ähnliche Einrichtung zugeordnet sein) oder mittels Sprachsteuerung. Der Roboter kann den Bediener auch bei den von ihm durchzuführenden Tätigkeiten unterstützen, indem mittels Display oder Sprachausgabe Informationen für den Bediener ausgegeben werden, die beispielsweise bestimmte Schritte beim Umrüsten der Maschine betreffen. So kann auch ein Video auf dem Display abgespielt oder ein Benutzerhandbuch angezeigt werden, je nachdem welche Tätigkeit vom Bediener ggf. auch mit welchem Bauteil ausgeführt werden muss.

Um ferner dem Roboter ein möglichst selbständiges Arbeiten zu ermöglichen, kann vorgesehen sein, dass die von ihm zu bearbeitenden Bauteile oder Formteile mit Markierungen, beispielsweise RFID-Tags ausgestattet sind und der Roboter diese über eine geeignete Vorrichtung (im Beispielfall ein RFID-Sensor oder-Lesegerät) erkennen kann.

Um zu gewährleisten, dass dem Roboter die nötigen Bauteile und ggf. auch Werkzeuge zur Verfügung stehen, wenn er an einer Behälterbehandlungsmaschine Tätigkeiten vorzunehmen hat, kann entweder der Bediener angewiesen werden, diese bereitzustellen oder bevorzugt ein führerloses Transportsystem vorgesehen sein, das mit Hilfe von automatischen Wagen oder anderen Einrichtungen die benötigten Bauteile, Werkstücke oder Maschinenkomponenten rechtzeitig zu der jeweiligen Behälterbehandlungsmaschine befördert oder auch ausgetauschte Komponenten einer Maschine einem (externen) Lager zuführt. Während die vorangegangenen Ausführungsformen sämtlichst mit einem bodengestützten, kollaborierenden Roboter 101 beschrieben wurden, kann insbesondere bei der Ausführungsform der Roboters derart, dass er ein Podest umfasst, der zusammen mit einer Führung 102 (siehe hierzu Figur 1) wechselwirkt, um die Bewegung des Roboters zu ermöglichen, auch eine Anordnung an Wänden oder der Decke einer Werkshalle erfolgen, womit der Boden der Werkshalle vollständig Bedienern zugänglich gemacht werden kann.

Grundsätzlich kann die Steuerung des Roboters oder auch aller Roboter in einer oder mehreren Behälterbehandlungsanlagen durch eine zentrale Steuerung (Computer, Server, etc.) gewährleistet werden, sodass auf einzelne Steuereinheiten, die jedem Roboter separat zugeordnet sind, verzichtet werden kann. Alternativ kann auch vorgesehen sein, dass der Roboter mittels geeigneter Sensoren (beispielsweise Kameras) die Umgebung erkennen kann und abhängig davon selbständig Aufgaben ableitet, die er dann bevorzugt ebenfalls selbständig/autonom durchführt.

## Patentansprüche

1. Behälterbehandlungsanlage (100) zum Behandeln von Behältern, wie Flaschen, mit wenigstens einer Behälterbehandlungsmaschine (120, 130) und einem mobilen, kollaborierenden Roboter (101), der zur Roboter-Roboter-Interaktion und/oder zur Roboter-Mensch-Interaktion ausgebildet ist, wobei der kollaborierende Roboter (101) ausgebildet ist, bei einem Wechsel eines Bauteils der Behälterbehandlungsmaschine mitzuwirken, **dadurch gekennzeichnet, dass** der kollaborierende Roboter (101) über ein Sicherungssystem verfügt, das ausgebildet ist, laufend ein Kollisionsrisiko mit einem Menschen in einer Umgebung des kollaborierenden Roboters zu bestimmen und die Bewegung des kollaborierenden Roboters so zu steuern, dass das Kollisionsrisiko minimiert wird.

2. Behälterbehandlungsanlage (100) nach Anspruch 1, wobei der kollaborierende Roboter keine trennende Schutzeinrichtung umfasst.

3. Behälterbehandlungsanlage (100) nach einem der Ansprüche 1 bis 2, umfassend eine zweite Behälterbehandlungsmaschine (120, 130), wobei der kollaborierende Roboter zwischen der Behälterbehandlungsmaschine und der zweiten Behälterbehandlungsmaschine verfahrbar ist.

4. Behälterbehandlungsanlage (100) nach einem der Ansprüche 1 bis 3, wobei der kollaborierende Roboter (101) einen Roboterarm (111) mit einem Werkzeug (112) zum Interagieren mit einer Behälterbehandlungsmaschine umfasst.

5. Behälterbehandlungsanlage (100) nach Anspruch 4, wobei der kollaborierende Roboter ein Werkzeugwechselsystem (230) umfasst, mit dem das Werkzeug (112) des kollaborierenden Roboters gegen ein anderes, in dem Werkzeugwechselsystem mitgeführtes Werkzeug (225, 224) ausgetauscht werden kann.

6. Behälterbehandlungsanlage (100) nach einem der Ansprüche 1 bis 5, wobei der kollaborierende Roboter auf einem verfahrbaren Podest (115) angeordnet ist.

7. Behälterbehandlungsanlage (100) nach Anspruch 6, wobei das verfahrbare Podest mit einer als Stator ausgebildeten und durch die Behälterbehandlungsanlage (100) verlaufenden Führung (102) einen Linearantrieb bildet.

8. Behälterbehandlungsanlage (100) nach einem der Ansprüche 1 bis 3, 6 oder 7, wobei der mobile, kollaborierende Roboter als humanoider Roboter (260) ausgebildet ist und zwei Arme (261, 262) und/oder zwei Beine (263, 264) umfasst, die ausgebildet sind, bei vom Roboter ausgeführten Tätigkeiten zusammenzuwirken.

9. Verfahren zum Wechseln eines Bauteils einer Behälterbehandlungsmaschine (120, 130) einer Behälterbehandlungsanlage (100) in der getränkeverarbeitenden Industrie, wobei ein zur Roboter-Roboter-Interaktion und/oder zur Roboter-Mensch-Interaktion ausgebildeter mobiler, kollaborierender Roboter (101) bei dem Wechsel des Bauteils der Behälterbehandlungsmaschine mitwirkt, **dadurch gekennzeichnet, dass** der kollaborierende Roboter mittels eines Sicherungssystems laufend ein Kollisionsrisiko mit einem Menschen in der Umgebung des kollaborierenden Roboters bestimmt und die Bewegung des kollaborierenden Roboters so gesteuert wird, dass das Kollisionsrisiko minimiert wird.

10. Verfahren nach Anspruch 9, wobei der kollaborierende Roboter (101) wenigstens eine der folgenden Tätigkeiten ausführt oder bei ihnen mitwirkt: Aufnehmen von Bauteilen an einer bestimmten Position, Bewegen von Bauteilen an eine bestimmte Position, Befestigungen von Bauteilen herstellen und/oder lösen, An- und/oder Abkoppeln von Medienleitungen und/oder Kabeln und/oder Versorgungsleitungen, Durchführen von Justage-arbeiten.

11. Verfahren nach einem der Ansprüche 9 bis 10, wobei der kollaborierende Roboter (101) vor und/oder während des Wechsels eines Bauteils der Behälterbehandlungsmaschine ein Werkzeug (112) am kollaborierenden Roboter gegen ein anderes, in einem Werkezugwechselsystem (230) mitgeführtes Werkzeug (225, 224) austauscht.

12. System aus wenigstens zwei Behälterbehandlungsanlagen, die jeweils wenigstens zwei Behälterbehandlungsmaschinen zum Behandeln von Behältern umfassen, wobei das System wenigstens einen mobilen, kollaborierenden Roboter (101) umfasst, der zur Roboter-Roboter-Interaktion und/oder zur Roboter-Mensch-Interaktion ausgebildet ist, wobei der kollaborierende Roboter (101) ausgebildet ist, bei einem Wechsel eines Bauteils einer Behälterbehandlungsmaschine einer der Behälterbehandlungsanlagen mitzuwirken und sich selbständig zwischen der Behälterbehandlungsmaschine der Behälterbehandlungsanlage und einer anderen Behälterbehandlungsmaschine der anderen Behälterbehandlungsanlage zu bewegen, wobei der kollaborierende Roboter (101) über ein Sicherungssystem verfügt, das ausgebildet ist, laufend ein Kollisionsrisiko mit einem Menschen in einer Umgebung des kollaborierenden Roboters zu bestimmen und die Bewegung des kollaborierenden Roboters so zu steuern, dass das Kollisionsrisiko minimiert wird.

13. System nach Anspruch 12, wobei die Behälterbehandlungsanlagen als Getränkeabfüllanlagen ausgebildet sind und jeweils wenigstens einen Füller zum Befüllen von Behältern mit einem Produkt und einen stromab des Füllers angeordneten Verschließer zum Verschließen der Behälter umfassen.

## Claims

1. Container treatment plant (100) for treating containers, such as bottles, comprising at least one container treatment machine (120, 130) and a mobile, collaborating robot (101) configured for robot-robot interaction and/or for robot-man interaction, wherein the collaborating robot (101) is configured to cooperate in exchanging a component of the container treatment machine, **characterized in that** the collaborating robot (101) comprises a safety system, which is configured to continuously determine a risk of collision with a human being in a surrounding of the collaborating robot and to control the movement of the collaborating robot such that the risk of collision will be minimized.

2. Container treatment plant (100) according to claim 1, wherein the collaborating robot does not comprise any separating protective device.

3. Container treatment plant (100) according to one of the claims 1 to 2, comprising a second container treatment machine (120, 130), wherein the collaborating robot is movable between the container treatment machine and the second container treatment machine.

4. Container treatment plant (100) according to one of the claims 1 to 3, wherein the collaborating robot (101) comprises a robot arm (111) with a tool (112) for interacting with a container treatment machine.

5. Container treatment plant (100) according to claim 4, wherein the collaborating robot comprises a tool changing system (230) by means of which the tool (112) of the collaborating robot can be exchanged for some other tool (225, 254) carried along in the tool changing system.

6. Container treatment plant (100) according to one of the claims 1 to 5, wherein the collaborating robot is arranged on a movable platform (115).

7. Container treatment plant (100) according to claim 6, wherein the movable platform forms, together with a guide (102) configured as a stator and extending through the container treatment plant (100), a linear drive.

8. Container treatment plant (100) according to one of the claims 1 to 3, 6 or 7, wherein the mobile, collaborating robot is configured as a humanoid robot (260) and comprises two arms (261, 262) and/or two legs (263, 264) configured to cooperate in activities performed by the robot.

9. Method of exchanging a component of a container treatment machine (120, 130) of a container treatment plant (100) in the beverage-processing industry, wherein a mobile, collaborating robot (101) configured for robot-robot interaction and/or for robot-man interaction cooperates in exchanging the component of the container treatment machine, **characterized in that** the collaborating robot, by means of a safety system, continuously determines a risk of collision with a human being in the surrounding of the collaborating robot and the movement of the collaborating robot is controlled such that the risk of collision will be minimized.

10. Method according to claim 9, wherein the collaborating robot (101) executes or participates in at least one of the following activities: picking up components at a specific position, moving components to a specific position, establishing and/or loosening fastenings of components, coupling and/or decoupling of media lines and/or cables and/or supply lines, executing adjustment work.

11. Method according to one of the claims 9 to 10, wherein, before and/or during the exchange of a component of the container treatment machine, the collaborating robot (101) exchanges a tool (112) at the collaborating robot for some other tool (225, 224) carried along in a tool changing system (230).

12. System comprising at least two container treatment plants, each comprising at least two container treatment machines for treating containers, wherein the system comprises at least one mobile, collaborating robot (101), which is configured for robot-robot interaction and/or for robot-man interaction, the collaborating robot (101) being configured to cooperate in exchanging a component of a container treatment machine of one of the container treatment plants and to move independently between the container treatment machine of the container treatment plant and another container treatment machine of the other container treatment plant, wherein the collaborating robot (101) comprises a safety system, which is configured to continuously determine a risk of collision with a human being in a surrounding of the collaborating robot and to control the movement of the collaborating robot such that the risk of collision will be minimized.

13. System according to claim 12, wherein the container treatment plants are configured as beverage filling plants and comprise each at least one filler for filling containers with a product and a capper arranged downstream of the filler and used for closing the containers.

## Revendications

1. Installation de traitement de récipients (100) permettant de traiter des récipients, tels que des bouteilles, comprenant au moins une machine de traitement de récipients (120, 130) et un robot collaboratif mobile (101) conçu pour une interaction robot-robot et/ou une interaction homme-robot, dans laquelle le robot collaboratif (101) est conçu pour prendre part à un changement d'un composant de la machine de traitement de récipients,
**caractérisée en ce que**
le robot collaboratif (101) dispose d'un système de sécurité conçu pour déterminer en permanence un risque de collision avec un humain dans un environnement du robot collaboratif et pour commander le mouvement du robot collaboratif de sorte que le risque de collision est minimisé.

2. Installation de traitement de récipients (100) selon la revendication 1, dans laquelle le robot collaboratif ne comprend pas de dispositif de protection assurant une déconnexion.

3. Installation de traitement de récipients (100) selon la revendication 1 ou 2, comprenant une seconde machine de traitement de récipients (120, 130), dans laquelle le robot collaboratif peut être déplacé entre la machine de traitement de récipients et la seconde machine de traitement de récipients.

4. Installation de traitement de récipients (100) selon l'une quelconque des revendications 1 à 3, dans laquelle le robot collaboratif (101) comprend un bras de robot (111) avec un outil (112) permettant d'interagir avec une machine de traitement de récipients.

5. Installation de traitement de récipients (100) selon la revendication 4, dans laquelle le robot collaboratif comprend un système de changement d'outil (230) grâce auquel l'outil (112) du robot collaboratif peut être échangé contre un autre outil (225, 224) supporté par le système de changement d'outil.

6. Installation de traitement de récipients (100) selon l'une quelconque des revendications 1 à 5, dans laquelle le robot collaboratif est agencé sur un socle mobile (115).

7. Installation de traitement de récipients (100) selon la revendication 6, dans laquelle le socle mobile forme un entraînement linéaire avec un guide (102) réalisé sous forme de stator et s'étendant à travers l'installation de traitement de récipients (100).

8. Installation de traitement de récipients (100) selon l'une quelconque des revendications 1 à 3, 6 ou 7, dans laquelle le robot collaboratif mobile est réalisé sous la forme d'un robot humanoïde (260) et comprend deux bras (261, 262) et/ou deux jambes (263, 264) qui sont conçus pour intervenir dans des activités mises en œuvre par le robot.

9. Procédé de changement d'un composant d'une machine de traitement de récipients (120, 130) d'une installation de traitement de récipients (100) dans l'industrie de traitement des boisons, dans lequel un robot collaboratif mobile (101) conçu pour une interaction robot-robot et/ou pour une interaction homme-robot prend part au changement du composant de la machine de traitement de récipients, **caractérisé en ce que**
le robot collaboratif détermine en permanence un risque de collision avec un humain dans l'environnement du robot collaboratif au moyen d'un système de sécurité et le mouvement du robot collaboratif est commandé de sorte que le risque de collision est minimisé.

10. Procédé selon la revendication 9, dans lequel le robot collaboratif (101) met en œuvre au moins une des activités ci-dessous ou prend part à celle(s)-ci : accueil de composants au niveau d'une position déterminée, déplacement de composants au niveau d'une position déterminée, création et/ou suppression de fixations de composants, couplage et/ou découplage de conduites de fluides et/ou de câbles et/ou de conduites d'alimentation, mise en œuvre de travaux d'ajustement.

11. Procédé selon la revendication 9 ou 10, dans lequel le robot collaboratif (101) échange un outil (112) au niveau du robot collaboratif contre un autre outil (225, 224) supporté par un système de changement d'outil (230) avant et/ou pendant le changement d'un composant de la machine de traitement de récipients.

12. Système constitué d'au moins deux installations de traitement de récipients comprenant respectivement au moins deux machines de traitement de récipients permettant de traiter des récipients, dans lequel le système comprend au moins un robot collaboratif mobile (101) conçu pour une interaction robot-robot et/ou une interaction homme-robot, dans lequel le robot collaboratif (101) est conçu pour prendre part à un changement d'un composant d'une machine de traitement de récipients d'une des installations de traitement de récipients et pour se déplacer de manière autonome entre la machine de traitement de récipients de l'installation de traitement de récipients et une autre machine de traitement de récipients de l'autre installation de traitement de récipients, dans lequel le robot collaboratif (101) dispose d'un système de sécurité conçu pour déterminer en permanence un risque de collision avec un humain dans un environnement du robot collaboratif et pour commander le mouvement du robot collaboratif de sorte que le risque de collision est minimisé.

13. Système selon la revendication 12, dans lequel les installations de traitement de récipients sont réalisées sous la forme d'installations de remplissage de boissons et comprennent respectivement au moins une remplisseuse permettant de remplir des récipients avec un produit et une capsuleuse agencée en aval de la remplisseuse et permettant d'obturer les récipients.
